# EUROPÄISCHE PATENTSCHRIFT

(11) **EP 2 243 887 B1**
(45) Veröffentlichungstag und Bekanntmachung des Hinweises auf die Patenterteilung: **12.10.2016**
(21) Anmeldenummer: 10160298.5
(22) Anmeldetag: 19.04.2010
(51) Int. Cl.: E04B 1/26, F16B 43/02

(54) **Beschlagelement**
Fitting element
Elément de ferrure

(30) Priorität: 20.04.2009 DE 102009019086
(43) Veröffentlichungstag der Anmeldung: 27.10.2010
(73) Patentinhaber: SWG Schraubenwerk Gaisbach GmbH, 74638 Waldenburg (DE)
(72) Erfinder: Ernst, Henning, 76761, Rülzheim (DE); Bauer, Armin, 74653, Künzelsau (DE)
(74) Vertreter: Patentanwälte Ruff, Wilhelm, Beier, Dauster & Partner mbB

(56) Entgegenhaltungen:
- EP-A1- 0 646 731
- EP-A2- 1 892 345
- BE-A2- 900 495
- DE-U1- 20 218 592

## Beschreibung

Die Erfindung betrifft ein Beschlagelement mit Blockiermittel, das sich mit Schrauben befestigen lässt.

Vollgewindeschrauben sind sowohl zur Verbindung von Stahl an Holz als auch zur Verbindung von Holz untereinander bekannt. Bei der Verbindung von Holz zu Holz können nicht nur Zugkräfte, sondern auch Druckkräfte übertragen werden, wobei diese Übertragung nicht über den Schraubenkopf, sondern über den Gewindegang erfolgt.

Bei der Verbindung von Stahl auf Holz kommen zurzeit nur Zugschrauben zum Einsatz. Zwischen dem Holz und der Schraube werden die Lasten über das Gewinde übertragen. Die Einleitung der Lasten aus der Schraube in die Stahlteile erfolgt ausschließlich über die Unterseite des Schraubenkopfs und das Stahlteil. Eine Druckkraft in Richtung der Schraubenachse kann der Schraubenkopf nicht in das Stahlteil übertragen, da er nur mit seiner Unterseite an dem Stahlteil anliegt.

Es ist bereits eine Verbindungseinrichtung zum Verbinden zweier Bauteile bekannt, die aus zwei Verbindungsplatten besteht, die jeweils an einem der zu verbindenden Bauteile angeschraubt werden. Die beiden Verbindungsplatten sind in Art einer Schwalbenschwanzverbindung ineinander einschiebbar. Die beiden verbundenen Bauteile können durch Anheben eines Bauteils voneinander gelöst werden (DE 202 18 592 U1). Beide Verbindungsplatten weisen Durchgangsbohrungen mit einer Auflage für die Unterseite eines Schraubenkopfs auf.

Die DE 202 18 592 U1 offenbart alle Merkmale der Oberbegriffe der Ansprüche 1 und 2.

Der Erfindung liegt die Aufgabe zu Grunde, eine Möglichkeit zu schaffen, axiale Druckkräfte von Schrauben in mit den Schrauben an Holzkonstruktionen zu befestigende Metallteile zu übertragen.

Zur Lösung dieser Aufgabe schlägt die Erfindung ein Beschlagelement und Blockiermittel, mit den im Anspruch 1 genannten Merkmalen und ein Beschlagelement und Blockiermittel, mit den im Anspruch 2 genannten Merkmalen vor. Weiterbildungen der Erfindung sind Gegenstand von Unteransprüchen.

Das Beschlagelement wird mit seiner Anlagefläche an den Gegenstand, mit dem es verbunden werden soll, angelegt. Durch die Durchgangsbohrung wird dann eine Schraube gestickt und in den Gegenstand eingeschraubt, bis die Schraube mit der Unterseite ihres Schraubenkopfs an der Auflage am äußeren Ende der Durchgangsbohrung anliegt. Anschließend wird das Blockiermittel so an dem Beschlagelement angebracht, dass es an der Stirnfläche des Schraubenkopfs anliegt und eine Rückwärtsbewegung des Schraubenkopfs und damit der Schraube verhindert. Auf diese Weise können auch Druckkräfte über die Schraube in das Beschlagelement eingeleitet werden. Von dem Beschlagelement können dann Kräfte abgenommen werden, beispielsweise von den beiden Enden des Beschlagelements.

Die von einer Außenseite des Beschlagelements ausgehende Durchgangsbohrung kann in Weiterbildung der Erfindung in der Anlagefläche ausmünden. Dann ist die Schraube nach dem Anbringen des Beschlagelements an keiner Stelle mehr sichtbar.

In nochmaliger Weiterbildung der Erfindung kann vorgesehen sein, dass die Durchgangsbohrung schräg gegenüber der Anlagefläche verläuft.

Es hat sich als sinnvoll herausgestellt, dass Beschlagelement leistenförmig mit einem mehreckigen Querschnitt auszubilden.

Da Holzkonstruktionen, für dieses Beschlagelement in erster Linie gedacht ist, üblicherweise mit ebenen Außenseiten versehen sind, kann in Weiterbildung der Erfindung vorgesehen sein, dass die Anlagefläche, mit der das Beschlagelement an der Oberfläche der Holzkonstruktion anliegt, ebenfalls eben ausgebildet ist. Für Spezialfälle, in denen die Oberfläche des Gegenstands, an dem das Beschlagelement anzubringen ist, nicht eben ist, kann auch vorgesehen sein, dass die Anlagefläche des Beschlagelements eine andere Form aufweist.

Auch die Außenfläche, von der aus die Durchgangsbohrung ausgeht, kann in Weiterbildung der Erfindung als ebene Fläche ausgebildet sein.

Erfindungsgemäß kann vorgesehen sein, dass die Achse der Durchgangsbohrung senkrecht zu der den Eingang der Durchgangsbohrung aufweisenden Außenfläche verläuft.

Beschlagelemente dieser Art werden üblicherweise mithilfe mehrerer Schrauben angeschraubt, so dass das Beschlagelement sinnvollerweise mehr als eine Durchgangsbohrung aufweist. Es kann dabei vorgesehen sein, dass bei mehreren Durchgangsbohrungen mindestens zwei Durchgangsbohrungen unter einem von null verschiedenen Winkel zueinander verlaufen.

Das Blockierelement kann in Weiterbildung beispielsweise derart ausgebildet sein, dass es von der Außenfläche her in die Durchgangsbohrung bis zur Anlage an der Stirnfläche des darin untergebrachten Schraubenkopfs reicht. In diesem Fall muss die Auflage für die Unterseite des Schraubenkopfs so angeordnet sein, dass zwischen der Außenfläche und der Stirnfläche des Schraubenkopfs ein Abstand vorhanden ist.

Für jede Durchgangsbohrung kann beispielsweise ein eigenes Blockierelement vorhanden sein, das als Stopfen ausgebildet ist und beispielsweise mit einem Gewinde in das äußere Ende der Durchgangsbohrung eingeschraubt wird.

Es ist ebenfalls möglich, dass diese stopfenartigen Blockierelemente an einer gemeinsamen Platte angeordnet sind, die in sonstiger Weise an dem Beschlagelement angebracht wird, beispielsweise durch Schrauben oder durch Stecken.

Eine weitere Möglichkeit, wie ein Blockierelement ausgebildet sein kann, besteht darin, dass es als Platte oder sonstiges Element an der Außenfläche im Bereich der Durchgangsbohrung anliegt, ohne Vorsprünge oder Stopfen aufzuweisen. In diesem Fall ist die Auflage für die Unterseite des Schraubenkopfs derart ausgebildet, dass der Schraubenkopf mit seiner Stirnseite bündig mit der Außenfläche des Beschlagelements verläuft.

In Weiterbildung der Erfindung kann vorgesehen sein, dass das Blockierelement von einer Profilleiste gebildet wird, die eine der Form des Beschlagelements komplementäre Form aufweist.

Das Blockierelement kann entweder mit dem Beschlagelement verbunden werden, oder auch mit dem Gegenstand, an dem das Beschlagelement angebracht wird, oder auch mit beiden.

Wenn das Blockierelement in Form einer Profilleiste ausgebildet ist, kann es insbesondere auch so ausgebildet sein, dass an mehreren Flächen des Beschlagelements anliegt.

Als besonders sinnvoll hat es sich herausgestellt, dass das Beschlagelement die Querschnittsform eines Trapezes aufweist, wobei insbesondere alle Flächen des Beschlagelements eben ausgebildet sind. Dann bildet die längere Seite des Trapezes die Anlagefläche, und die beiden benachbarten schräg verlaufenden Flächen bilden die Außenflächen, von denen die Durchgangsbohrungen ausgehen. Damit ist gleichzeitig dafür gesorgt, dass die Schraubenlängsachsen von beiden Seiten aus unter einem von null verschiedenen Winkel und schräg gegenüber der Anlagefläche verlaufen.

Eine weitere Möglichkeit, wie das Beschlagelement ausgebildet sein kann, besteht darin, dass die Form einer Raute aufweist.

Das Blockierelement kann beispielsweise formschlüssig mit dem Beschlagelement verbunden werden, oder auch kraftschlüssig, beispielsweise durch eine Verschraubung.

Eine formschlüssige Verbindung zwischen dem Blockierelement und dem Beschlagelement kann beispielsweise in der Weise geschehen, dass dies in Richtung der Längsachse des Beschlagelements, also parallel zur Oberfläche des Gegenstands, aufgeschoben wird.

Bei einer Verschraubung mithilfe einer getrennten Schraube kann das Blockierelement auch senkrecht zur Oberfläche des Gegenstands auf das Beschlagelement aufgesetzt werden.

Erfindungsgemäß kann die Schraube in dem Beschlagelement auch durch ein zweites benachbartes Beschlagelement blockiert werden, wenn dieses in seiner Form so an das erste Beschlagelement angepasst ist, dass es die Funktion des Blockierens erfüllen kann.

Weitere Merkmale, Einzelheiten und Vorzüge der Erfindung ergeben sich aus den Ansprüchen deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die Seitenansicht eines als Leiste ausgebildeten Beschlagelements;
- Figur 2: einen Querschnitt durch das Beschlagelement der Figur 1;
- Figur 3: einen Querschnitt durch ein zu dem Beschlagelement der Figur 1 gehörendes Blockierelement;
- Figur 4: eine Draufsicht auf das Beschlagelement der Figuren 1 und 2;
- Figur 5: perspektivisch das zusammengesetzte Beschlagelement;
- Figur 6: die Draufsicht auf die Anordnung der Figur 5;
- Figur 7: eine der Figur 1 entsprechende Darstellung bei einer zweiten Ausführungsform;
- Figur 8: eine der Figur 7 entsprechende Darstellung bei einer nochmals weiteren Ausführungsform;
- Figur 9: ein Blockierelement;
- Figur 10: eine weitere Ausführungsform eines Beschlagelements;
- Figur 11: die Anordnung mehrerer Beschlagelemente an einer Holzkonstruktion;
- Figur 12: eine der Figur 7 entsprechende Darstellung einer weiteren Ausführungsform;
- Figur 13: einen Anwendungsfall.

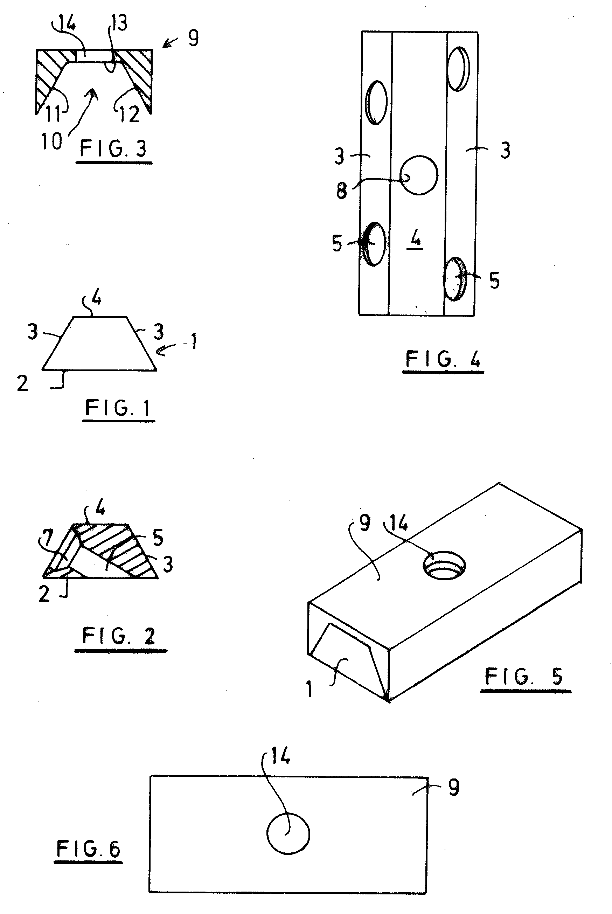

Zunächst zu dem Beschlagelement, das in den Figuren 1, 2 und 4 dargestellt ist. Das Beschlagelement weist die Form einer Leiste 1 auf, die einen trapezförmigen Querschnitt aufweist. Die längere Seite des Trapezes bildet die Anlagefläche 2. Die Schrägflächen 3 bilden die Außenflächen, und der Anlagefläche 2 gegenüber liegt die Frontfläche 4. Von den schrägen Außenflächen 3 gehen im dargestellten Ausführungsbeispiel jeweils zwei Durchgangsbohrungen 5 durch das Beschlagelement hindurch. Eine dieser Durchgangsbohrungen 5 ist in Figur 2 zu sehen. Die Durchgangsbohrung 5 mündet in der Anlagefläche 2 aus. Das der Anlagefläche 2 entgegengesetzten Ende der Durchgangsbohrung 5 ist kegelförmig erweitert und bildet dadurch eine Auflagefläche 7 für die Unterseite eines Schraubenkopfs, der als Senkkopf ausgebildet ist. Die Achse der Durchgangsbohrung 5 verläuft senkrecht zu der Außenfläche 3, so dass die Stirnfläche des Schraubenkopfs eine in der Durchgangsbohrung 5 eingesetzten Schraube bündig mit der Außenfläche 3 verlaufen kann.

Der Draufsicht der Figur 4 kann man entnehmen, dass von jeder Schrägfläche 3 jeweils zwei Durchgangsbohrungen 5 ausgehen. In der Mitte der Frontfläche 4 ist eine mit einem Gewinde versehene senkrecht zur Frontfläche 4 verlaufende Bohrung 8 ausgebildet. Diese Gewindebohrung 8 dient dazu, dass in Figur 3 dargestellte Blockierelement 9 mithilfe einer Schraube an dem Beschlagelement anzuschrauben. Das Blockierelement 9 ist ebenfalls als Leiste ausgebildet und weist auf seiner einen Seite einen durchgehenden Kanal 10 auf, dessen Profil komplementär zu dem Profil des Beschlagelements ausgebildet ist. Die eine Flanke 11 ist zur Anlage an der einen Außenseite 3 des Beschlagelements ausgebildet, und die andere Flanke 12 zur Anlage an der gegenüberliegenden Außenseite 3 des Beschlagelements. Der die beiden Flanken 11, 12 verbindende Boden 13 liegt dann auf der Frontfläche 4 des Beschlagelements auf. In dem Boden 13 ist ein Durchgangsloch 14 ausgebildet, durch das hindurch eine Schraube in die Gewindebohrung 8 des Beschlagelements eingeschraubt werden kann.

In zusammengesetzten Zustand liegt das Blockierelement in der in Figur 5 dargestellten Weise auf dem Beschlagelement auf. Die Flanken 11, 12 liegen flächig berührend auf den Außenseiten 3 an. Dadurch wird eine Schraube, die durch die Durchgangsbohrung 5 hindurch gesteckt ist, so festgehalten, dass sie nicht nur Zugkräfte, sondern auch Druckkräfte auf das Beschlagelement übertragen kann.

Von oben sieht das zusammengesetzte Beschlagelement so aus, wie dies die Figur 6 zeigt.

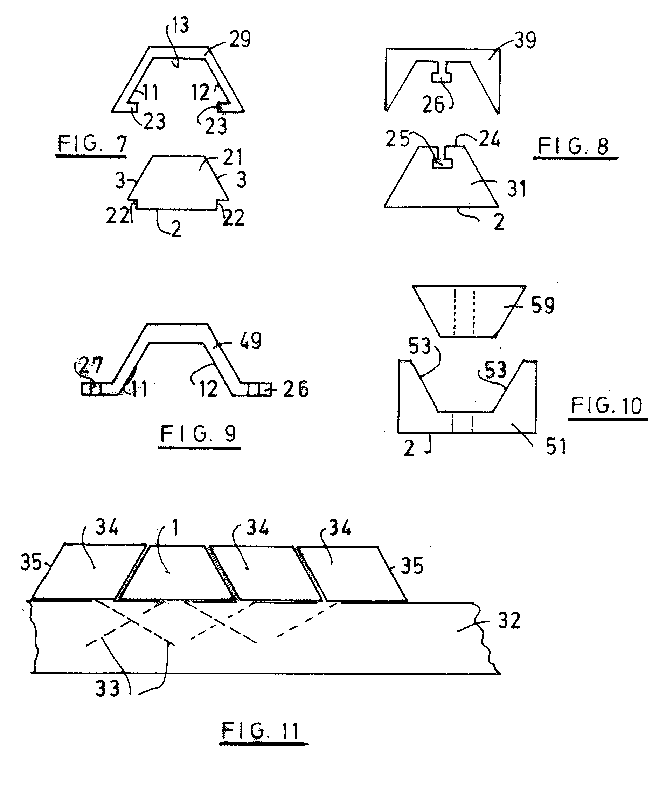

Bei der in den Figuren 1 bis 6 dargestellten Ausführungsform wird das Blockierelement 9 aus einer Richtung senkrecht zu dem Gegenstand, an dem das Beschlagelement mit seiner Anlagefläche 2 befestigt ist, aufgeschoben beziehungsweise aufgesetzt. Die Befestigung geschieht formschlüssig mithilfe einer Schraube. Es gibt aber auch andere Methoden, wie ein Blockierelement aussehen kann und wie es befestigt werden kann. Ein erstes Beispiel hierfür ist in Figur 7 dargestellt, wobei die beiden Teile, nämlich das Beschlagelement 21 und das Blockierelement 29, getrennt dargestellt sind. Die beiden Außenflächen 3 des Beschlagelements 21 reichen nicht ganz bis zu der Anlagefläche 2, und dort, wo bei einem Trapez die spitzen Winkel sind, ist hier eine Ausklinkung 22 vorhanden, deren Wände parallel beziehungsweise senkrecht zur Anlagefläche 2 verlaufen.

Das Blockierelement weist wiederum die Form eines Profils auf, und die durch zwei Flanken 11, 12 und einen Boden 13 gebildete Innenkontur entspricht der Außenkontur des Beschlagelements 21. Die beiden an den Enden der Flanken 11,12 vorhandenen nach innen gerichteten Vorsprünge 23 entsprechen der Ausklinkung 22. Dieses Blockierelement 29 lässt sich in Längsrichtung des Beschlagelements 21 auf dieses aufschieben, wobei dann bei aufgeschobenem Blockierelement 29 die gleiche Situation wie bei der vorhergehenden Ausführungsform auftritt. Die Flanken 11, 12 liegen flächig an den Außenflächen 3 des Beschlagelements 21 an.

Das Beschlagelement 21 der Figur 7 ist im Übrigen genauso aufgebaut wie das Beschlagelement der vorhergehenden Ausführungsform, enthält also ebenfalls Durchgangsbohrungen 5.

Bei der Ausführungsform der Figur 8 weist die Frontfläche 24 des ansonsten der Figur 1 gleichen Beschlagelements eine in Längsrichtung durchgehende hinterschnittene T-förmige Nut 25 auf. Das Blockierelement 39 weist einen der Nut 25 komplementären in Längsrichtung verlaufenden Vorsprung 26 auf und ist im Übrigen genauso aufgebaut wie das Blockierelement 9 der Figur 3. Auch dieses Blockierelement wird in Längsrichtung des Beschlagelements 31 auf dieses aufgeschoben.

Bei den bisher abgehandelten Ausführungsformen wird das Blockierelement an dem als Leiste ausgebildeten Beschlagelement direkt befestigt.

Die Figur 9 zeigt ein Blockierelement 49, das eine ähnliche Form aufweist wie das Blockierelement 29 der Figur 7, wobei jedoch an den Enden der Flanken 11, 12 nach außen gerichtete Flansche 26 ausgebildet sind. Diese Flansche 26 weisen Löcher 27 auf. Dieses Blockierelement 49 kann auf ein Beschlagelement aufgesetzt werden, wobei hier wiederum die Flanken 11, 12 an den Außenflächen 3 anliegen. Die Befestigung geschieht allerdings nicht oder nicht nur an dem Beschlagelement, sondern mithilfe der Löcher 27 in den Flanschen 26 an dem Gegenstand, an dem auch das Beschlagelement angeschraubt ist.

Figur 10 zeigt eine Ausführungsform, wo das Beschlagelement 51 etwa die Form des Blockierelements 9 der Figur 3 aufweist, während das Blockierelement die Querschnittsform des Beschlagelements 1 der Figur 1 aufweist. Die Befestigung des Blockierelements 59 an dem Beschlagelement 51 geschieht in der gleichen Weise wie bei der in den Figuren 1 bis 6 dargestellten Ausführungsform. Die Schrauben beziehungsweise die Durchgangsbohrungen verlaufen jetzt von den Flankenflächen 53, die jetzt die Rolle der Außenflächen 3 übernehmen. Die Durchgangsbohrungen münden hier allerdings nicht in der Anlagefläche 2 aus.

Die Figur 11 zeigt die Anwendung mehrerer Elemente an einem Teil 32 einer Holzkonstruktion. Ein Beschlagelement 1, entsprechend der Darstellung der Figuren 1 und 2, ist an dem Teil 32 der Holzkonstruktion mit mehreren Reihen von Schrauben angeschraubt, die durch ihre gestrichelt dargestellten Achsen 33 repräsentiert sind. Zum Blockieren der Schrauben in den Durchgangsbohrungen ist sowohl links als auch rechts jeweils eine rautenförmige Leiste 34 vorhanden, die jeweils eine Durchgangsbohrung oder eine Reihe von Durchgangsbohrungen aufweisen, die nur von einer Außenfläche 35 ausgehen. Es lassen sich auf diese Weise mehrere Beschlagelemente nebeneinander anordnen, wobei mit Ausnahme der beiden äußersten rautenförmigen Blockierelemente jedes andere Blockierelement auch gleichzeitig die Rolle eines Beschlagelements übernimmt.

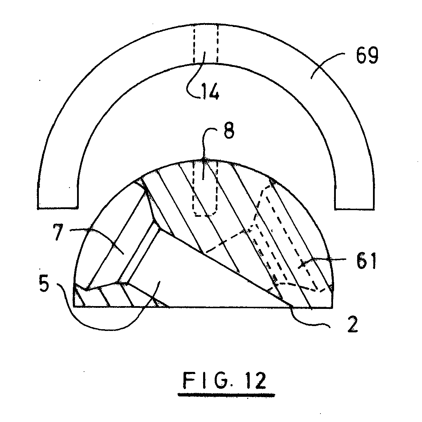

Während die bisherigen Ausführungsformen des Beschlagelements einen Querschnitt in Form eines Mehrecks aufweisen, zeigt die Ausführungsform der Figur 12 ein Beschlagelement 61, bei dem die von der Anlagefläche 2 abgewandte Außenfläche im Querschnitt eine Krümmung aufweist, beispielsweise eine halbkreisförmige oder auch in sonstiger Weise gekrümmte Begrenzungslinie. Dementsprechend weist das Blockierelement 69 eine Innenform auf, die ebenfalls als gekrümmte Linie im Querschnitt ausgebildet ist. Die Befestigung des Blockierelements 69 an dem Beschlagelement 61 kann auch irgendeine der bisher beschriebenen Weise geschehen, beispielsweise dadurch, dass durch eine Öffnung 14 des Blockierelements 69 eine Schraube hindurchgesteckt und in die Gewindebohrungen 8 des Beschlagelements 61 eingeschraubt wird.

Bei der Ausführungsform der Figur 12 kann es sinnvoll sein, um bei der Übertragung einer Druckkraft diese auf eine größere Fläche zu übertragen, an der Innenseite des Blockiermittels Vorsprünge anzuformen, die in die Durchgänge 5 für die Schrauben eingreifen und flächig an der Stirnfläche der entsprechenden Schraube anliegen.

Die Querschnittsform für das Beschlagelement kann beliebige Formen annehmen, beispielsweise Mehrecke, gekrümmte Linien, Kombinationen aus Mehrecken und gekrümmten Linien oder dergleichen.

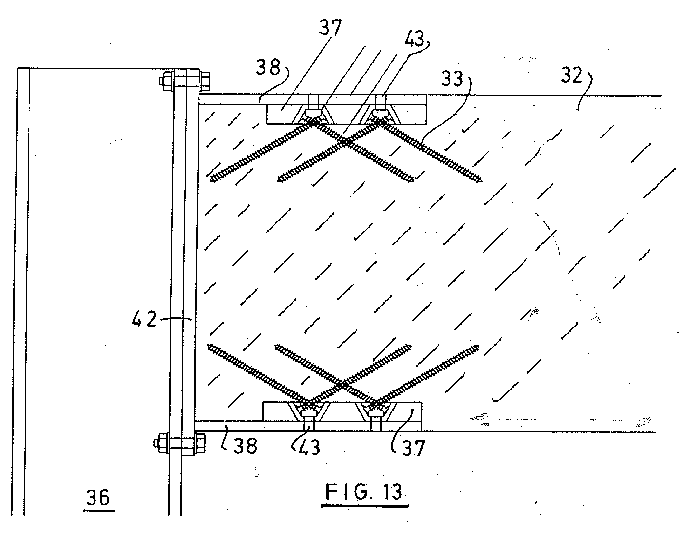

In Figur 13 ist die Befestigung eines Holzbalkens 32 an einem Stahlträger 36 dargestellt. In zwei einander gegenüberliegende Seiten des Holzbalkens 32 ist jeweils eine Ausnehmung 37 eingefräst. Innerhalb dieser Ausnehmung 37 werden jeweils zwei Beschlagelemente nach der Erfindung mit den angedeuteten Schrauben 33 festgeschraubt. Anschließend werden die Blockierelemente, die hier nur angedeutet sind, auf die Beschlagelemente aufgesetzt und der Holzbalken 32 von rechts her zwischen zwei Laschen 38 eingeschoben, die parallel zueinander mit einer Stahlplatte 42 verschweißt sind. Diese Stahlplatte 42 wird an dem Stahlträger 36 mit den dargestellten Schrauben und Muttern festgeschraubt. Anschließend werden durch Löcher 43 der Laschen 38 und durch die Löcher 14 der Blockierelemente Schrauben in die Bohrungen 8 der Beschlagelemente eingeschraubt. Dadurch werden die Beschlagelemente in Längsrichtung des Holzbalkens 32 mit den Laschen 38 verbunden.

Es handelt sich bei dem dargestellten Ausführungsbeispiel um eine biegesteife Rahmenecke.

## Patentansprüche

1. Beschlagelement und Blockiermittel, mit dem Beschlagelement zur Anbringung an einem Gegenstand (32), mit
einer zur Anlage an dem Gegenstand (32) bestimmten Anlagefläche (2),
einer von dieser verschiedenen Außenfläche (3, 4),
mindestens einer von der Außenfläche (3) ausgehenden durch das Beschlagelement hindurchgehenden Durchgangsbohrung (5), die
an ihrer Außenseite eine Auflage (7) für die Unterseite eines Schraubenkopfs aufweist, sowie mit dem Blockiermittel zur Anlage an der Stirnfläche des auf der Auflage aufliegenden Schraubenkopfs, **dadurch gekennzeichnet, dass** das Blockiermittel mit dem Beschlagelement mit einer in eine Gewindebohrung (8) des Beschlagelements eingreifenden Schraube verbindbar ist.

2. Beschlagelement und Blockiermittel, mit dem Beschlagelement zur Anbringung an einem Gegenstand (32), mit
einer zur Anlage an dem Gegenstand (32) bestimmten Anlagefläche (2),
einer von dieser verschiedenen Außenfläche (3, 4),
mindestens einer von der Außenfläche (3) ausgehenden durch das Beschlagelement hindurchgehenden Durchgangsbohrung (5), die an ihrer Außenseite eine Auflage (7) für die Unterseite eines Schraubenkopfs aufweist, sowie mit dem Blockiermittel zur Anlage an der Stirnfläche des auf der Auflage aufliegenden Schraubenkopfs, **dadurch gekennzeichnet, dass** das Blockiermittel mit dem Beschlagelement mit einer in den Gegenstand (32) einzuschraubenden Schraube verbindbar ist, wobei das Blockierelement (34) als Leiste ausgebildet ist und die Querschnittsform einer Raute oder eines Trapezes aufweist.

3. Beschlagelement und Blockiermittel nach Anspruch 1 oder 2, bei dem die Durchgangsbohrung (5) in der Anlagefläche (2) ausmündet.

4. Beschlagelement und Blockiermittel nach einem der vorhergehenden Ansprüche, bei der die Durchgangsbohrung (5) schräg gegenüber der Anlagefläche (2) verläuft.

5. Beschlagelement und Blockiermittel nach einem der vorhergehenden Ansprüche, wobei das Beschlagelement als Leiste mit einem mehreckigen Querschnitt ausgebildet, insbesondere mit einem Querschnitt in Form eines Trapezes oder einer Raute.

6. Beschlagelement und Blockiermittel nach Anspruch 5, bei dem die Auflagefläche (7) und/oder die den Eingang der Durchgangsbohrung (5) aufweisende Außenfläche (3, 53) eben ausgebildet ist.

7. Beschlagelement und Blockiermittel nach einem der vorhergehenden Ansprüche, bei dem die Achse der Durchgangsbohrung (5) senkrecht zu der den Mitteln Eingang der Durchgangsbohrung (5) aufweisenden Außenfläche (3, 53) verläuft.

8. Beschlagelement und Blockiermittel nach einem der Ansprüche 4 bis 7, bei dem bei mehreren Durchgangsbohrungen (5) mindestens zwei Durchgangsbohrungen (5) unter einem von null verschiedenen Winkel zueinander verlaufen.

9. Beschlagelement und Blockiermittel nach einem der vorhergehenden Ansprüche, bei dem ein Stopfen mindestens teilweise in der Durchgangsbohrung (5) angeordnet ist.

10. Beschlagelement und Blockiermittel nach einem der vorhergehenden Ansprüche, bei dem das Blockierelement (9, 29, 39, 49, 59) auf der Außenseite (3, 53) des Beschlagelements anliegt.

11. Beschlagelement und Blockiermittel nach einem der vorhergehenden Ansprüche, bei dem das Blockierelement durch eine Profilleiste gebildet ist, die eine der Außenform des Beschlagelements komplementäre Form aufweist.

12. Beschlagelement und Blockiermittel nach Anspruch 11, bei dem die Profilleiste des Blockierelements flächig an mehreren Flächen (3, 4) des Beschlagelements anliegt.

13. Beschlagelement und Blockiermittel nach einem der vorhergehenden Ansprüche, bei dem das Blockierelement formschlüssig mit dem Beschlagelement verbindbar ist.

14. Beschlagelement und Blockiermittel nach einem der vorhergehenden Ansprüche, bei dem das Blockierelement (9, 49, 59) aus einer Richtung senkrecht zur Anlagefläche mit dem Beschlagelement verbindbar ist.

15. Beschlagelement und Blockiermittel nach einem der vorhergehenden Ansprüche, bei dem das Blockierelement (29, 39) aus einer Richtung parallel zur Anlagefläche mit dem Beschlagelement verbindbar ist.

## Claims

1. Fitting element and blocking means, including the fitting element for attachment to an object (32), comprising
an abutment surface (2) intended for abutment on the object (32),
an exterior surface (3, 4) different therefrom,
at least one through bore (5) initiating from the exterior surface (3) and passing through the fitting element,
which bore has on the exterior side thereof a support (7) for the bottom side of a screw head, and comprising
the blocking means for abutment on the end face of the screw head resting on the support,
**characterized in that**
the blocking means is connectable to the fitting element by a screw engaging in a threaded bore (8) of the fitting element.

2. Fitting element and blocking means, including the fitting element for attachment to an object (32), comprising
an abutment surface (2) intended for abutment on the object (32),
an exterior surface (3, 4) different therefrom,
at least one through bore (5) initiating from the exterior surface (3) and passing through the fitting element,
which bore has on the exterior side thereof a support (7) for the bottom side of a screw head, and comprising
the blocking means for abutment on the end face of the screw head resting on the support,
**characterized in that**
the blocking means is connectable to the fitting element by a screw to be screwed into the object (32), wherein a blocking element (34) is in the form of a strip and has a diamond-type or trapezoidal cross-sectional shape.

3. Fitting element and blocking means according to claim 1 or 2, wherein the through bore (5) ends in the abutment surface (2).

4. Fitting element and blocking means according to any of the preceding claims, wherein the path of the through bore (5) is inclined in relation to the abutment surface (2).

5. Fitting element and blocking means according to any of the preceding claims, wherein the fitting element is designed as a strip having a polygonal cross section, in particular having a trapezoidal or a diamond-type cross-sectional shape.

6. Fitting element and blocking means according to claim 5, wherein the support surface (7) and/or the exterior surface (3, 53) including the mouth of the through bore (5) is planar.

7. Fitting element and blocking means according to any of the preceding claims, wherein the axis of the through bore (5) extends perpendicular to the exterior surface (3, 53) including the mouth of the through bore (5).

8. Fitting element and blocking means according to any of claims 4 to 7, wherein in the case of a plurality of through bores (5) at least two through bores (5) extend in relation to each other at an angle differing from zero.

9. Fitting element and blocking means according to any of the preceding claims, wherein a plug is at least partially disposed within the through bore (5).

10. Fitting element and blocking means according to any of the preceding claims, wherein the blocking element (9, 29, 39, 49, 59) abuts on the exterior side (3, 53) of the fitting element.

11. Fitting element and blocking means according to any of the preceding claims, wherein the blocking element is a profiled strip, which has a shape complementary to the exterior shape of the fitting element.

12. Fitting element and blocking means according to claim 11, wherein the profiled strip of the blocking element rests in a planar manner on a plurality of surfaces (3, 4) of the fitting element.

13. Fitting element and blocking means according to any of the preceding claims, wherein the blocking element is connectable to the fitting element in a form-fitting manner.

14. Fitting element and blocking means according to any of the preceding claims, wherein the blocking element (9, 49, 59) is connectable to the fitting element from a direction perpendicular to the abutment surface.

15. Fitting element and blocking means according to any of the preceding claims, wherein the blocking element (29, 39) is connectable to the fitting element from a direction parallel to the abutment surface.

## Revendications

1. Élément de ferrure et moyen de blocage, comportant l'élément de ferrure pour l'apposition à un objet (32), comprenant
une surface d'appui (2) destinée à l'appui sur l'objet (32),
une surface extérieure (3, 4) différente de cette surface d'appui,
au moins un alésage transversal (5) à partir de la surface extérieure (3) et traversant l'élément de ferrure,
lequel alésage comporte sur le côté extérieur un support (7) pour le côté inférieur d'une tête de vis, et comprenant
le moyen de blocage pour l'apposition à la surface frontale de la tête de vis s'appliquant sur le support,
**caractérisé en ce que**
le moyen de blocage est connectable à l'élément de ferrure par une vis engageant dans un alésage fileté (8) de l'élément de ferrure.

2. Élément de ferrure et moyen de blocage, comportant l'élément de ferrure pour l'apposition à un objet (32), comprenant
une surface d'appui (2) destinée à l'appui sur l'objet (32),
une surface extérieure (3, 4) différente de cette surface d'appui,
au moins un alésage transversal (5) à partir de la surface extérieure (3) et traversant l'élément de ferrure,
lequel alésage comporte sur le côté extérieur un support (7) pour le côté inférieur d'une tête de vis, et comprenant
le moyen de blocage pour l'apposition à la surface frontale de la tête de vis s'appliquant sur le support,
**caractérisé en ce que**
le moyen de blocage est connectable à l'élément de ferrure par une vis à visser dans l'objet (32), dans lequel un élément de blocage (34) est conçu sous forme d'une bande et présente une forme en coupe transversale d'un losange ou d'un trapèze.

3. Élément de ferrure et moyen de blocage selon la revendication 1 ou 2, dans lequel l'alésage transversal (5) débouche dans la surface d'appui (2).

4. Élément de ferrure et moyen de blocage selon l'une quelconque des revendications précédentes, dans lequel l'alésage transversal (5) s'étend en oblique par rapport à la surface d'appui (2).

5. Élément de ferrure et moyen de blocage selon l'une quelconque des revendications précédentes, dans lequel l'élément de ferrure est conçu comme bande à section transversale polygonale, en particulier à section transversale sous forme d'un trapèze ou d'un losange.

6. Élément de ferrure et moyen de blocage selon la revendication 5, dans lequel la surface de support (7) et/ou la surface extérieure (3, 53) comportant l'aperture de l'alésage transversal (5) est conçu de forme plane.

7. Élément de ferrure et moyen de blocage selon l'une quelconque des revendications précédentes, dans lequel l'axe de l'alésage transversal (5) s'étend perpendiculaire à la surface extérieure (3, 53) comportant l'aperture de l'alésage transversal (5).

8. Élément de ferrure et moyen de blocage selon l'une quelconque des revendications 4 à 7, dans lequel en cas d'une pluralité d'alésages transversaux (5) au moins deux alésages transversaux (5) s'étendent l'un par rapport à l'autre sous un angle différent de zéro.

9. Élément de ferrure et moyen de blocage selon l'une quelconque des revendications précédentes, dans lequel un bouchon est disposé au moins partiellement dans l'alésage transversal (5).

10. Élément de ferrure et moyen de blocage selon l'une quelconque des revendications précédentes, dans lequel l'élément de blocage (9, 29, 39, 49, 59) prend appui sur le côté extérieur (3, 53) de l'élément de ferrure.

11. Élément de ferrure et moyen de blocage selon l'une quelconque des revendications précédentes, dans lequel l'élément de blocage est conçu comme bande profilée présentant une forme complémentaire à la forme extérieure de l'élément de ferrure.

12. Élément de ferrure et moyen de blocage selon la revendication 11, dans lequel la bande profilée de l'élément de blocage prend appui sur plusieurs surfaces (3, 4) de l'élément de ferrure en plain.

13. Élément de ferrure et moyen de blocage selon l'une quelconque des revendications précédentes, dans lequel l'élément de blocage est connectable à l'élément de ferrure par complémentarité de forme.

14. Élément de ferrure et moyen de blocage selon l'une quelconque des revendications précédentes, dans lequel l'élément de blocage (9, 49, 59) est connectable à l'élément de ferrure d'une direction perpendiculaire à la surface d'appui.

15. Élément de ferrure et moyen de blocage selon l'une quelconque des revendications précédentes, dans lequel l'élément de blocage (29, 39) est connectable à l'élément de ferrure d'une direction en parallèle à la surface d'appui.
